# EUROPÄISCHE PATENTSCHRIFT

(11) **EP 1 864 035 B1**
(45) Veröffentlichungstag und Bekanntmachung des Hinweises auf die Patenterteilung: **25.02.2009**
(21) Anmeldenummer: 05824321.3
(22) Anmeldetag: 22.12.2005
(51) Int. Cl.: F16H 3/72

(54) **ANTRIEBSSTRANG EINES KRAFTFAHRZEUGS**
MOTOR VEHICLE DRIVE TRAIN
CHAINE CINEMATIQUE D'UN VEHICULE A MOTEUR

(30) Priorität: 24.03.2005 DE 102005014332
(43) Veröffentlichungstag der Anmeldung: 12.12.2007
(73) Patentinhaber: Volkswagen Aktiengesellschaft, 38436 Wolfsburg (DE)
(72) Erfinder: HEILENKÖTTER, Dirk, 38524 Sassenburg (DE); FRITZ, Wolfgang, 38518 Gifhorn (DE); ROMANSKI, Bernhard, 38550 Isenbüttel (DE)
(86) Internationale Anmeldenummer: PCT/EP2005/013890
(87) Internationale Veröffentlichungsnummer: WO 2006/099898

(56) Entgegenhaltungen:
- DE-A1- 10 043 510
- DE-A1- 19 739 906
- US-A- 1 558 806
- TENBERGE P ET AL: "ELEKTROMECHANISCHES HYBRIDGETRIEBE" VDI BERICHTE, DUESSELDORF, DE, Nr. 1459, 1999, Seiten 307-330, XP001131976 ISSN: 0083-5560

## Beschreibung

Die Erfindung betrifft einen Antriebsstrang eines Kraftfahrzeugs, mit einem als Verbrennungsmotor ausgebildeten Antriebsmotor und einem mehrstufigen Automatikgetriebe, das mehrere zwischen einer Eingangswelle und einer Ausgangswelle angeordnete und miteinander gekoppelte Planetengetriebe aufweist, die jeweils als Getriebebauteile mindestens ein außenverzahnte Sonnenrad, einen mehrere außenverzahnte Planetenräder tragenden Planetenträger und ein innenverzahntes Hohlrad enthalten, und die zur Einstellung verschiedener Gangstufen zumindest teilweise über mehrere, jeweils mit einem der Getriebebauteile in Verbindung stehende Schaltelemente schaltbar sind.

Antriebsstränge von Kraftfahrzeugen mit mehrstufigen Automatikgetrieben der vorgenannten Bauart sind in unterschiedlicher Ausführung bekannt, wobei jeweils im Kraftfluss zwischen dem Antriebsmotor und dem Automatikgetriebe zumeist ein hydraulische Drehmomentwandler angeordnet ist. Der Drehmomentwandler dient zur Isolierung des Automatikgetriebes von Drehschwingungen des Antriebsmotors, zur Dämpfung von Schaltrucken des Automatikgetriebes gegenüber dem Antriebsmotor, und zur Erhöhung des Motormomentes des Antriebsmotors beim Anfahren. Nachteilig an einem derartigen Antriebsstrang ist das relativ hohe Gewicht und der große Bauraumbedarf für das Automatikgetriebe und den Drehmomentwandler. Ein weiterer Nachteil besteht in einem vergleichsweise hohen Kraftstoffverbrauch, der u. a. auf die Antriebsleistung für eine zur Versorgung des Drehmomentwandlers und der Schalteinrichtung des Automatikgetriebes erforderliche Hydraulikpumpe und auf einen zumindest beim Anfahren und bei niedriger Fahrgeschwindigkeit vorhandenen Antriebsschlupf innerhalb des Drehmomentwandlers zurückzuführen ist.

Zur Absenkung des Kraftstoffverbrauchs und der Schadstoffemissionen von Kraftfahrzeugen sind in den letzten Jahren mehrere Ausführungen von Hybrid- Antriebssträngen entwickelt worden, die zumeist als eine Parallelanordnung eines Verbrennungsmotors mit mindestens einem Elektromotor ausgebildet sind und sich in bestimmten Kraftfahrzeugen teilweise schön in Serienproduktion befinden.

So ist aus der EP 0 791 495 A2 und der DE 199 25 229 A1 ein Hybrid-Antriebsstrang mit einem Verbrennungsmotor und zwei Elektromaschinen bekannt, bei dem der Verbrennungsmotor über ein Getriebe mit der ersten Elektromaschine gekoppelt ist und mit einem Achsgetriebe einer Antriebsachse in Verbindung steht. Das Getriebe ist als ein einfacher Planetenradsatz ausgebildet, dessen Sonnenrad unmittelbar mit der ersten Elektromaschine verbunden ist, dessen Planetenträger über ein Kupplungs- und Dämpfungselement mit dem Verbrennungsmotor gekoppelt ist; und dessen Hohlrad über ein Zwischengetriebe mit dem Achsgetriebe in Verbindung steht. Die zweite Elektromaschine ist unmittelbar mit dem Hohlrad des Getriebes verbunden. Die beiden Elektromaschinen sind jeweils als Motor und als Generator betreibbar, wobei die erste Elektromaschine vorwiegend als Steuerungselement zur Verteilung der Antriebskraft des Verbrennungsmotors und die zweite Elektromaschine selektiv als Antriebsmotor zum Antrieb des Kraftfahrzeugs und als Generator zur Rückgewinnung von Bewegungsenergie (Rekuperation) bei Bremsvorgängen und im Schubbetrieb des Kraftfahrzeugs vorgesehen ist. Nachteilig an diesem Antriebsstrang ist die für den Verbrennungsmotor ungünstig kleine Spreizung des Getriebes mit einer relativ kleinen Mindestübersetzung und einer relativ großen Maximalübersetzung, was ein relativ geringes Durchzugs- und Beschleunigungsvermögen des Kraftfahrzeugs beim.Anfahren und bei niedriger Fahrgeschwindigkeit und eine hohe Motordrehzahl verbunden mit einem hohen Kraftstoffverbrauch und einer hohen Lärmentwicklung bei hoher Fahrgeschwindigkeit zur Folge hat. Des Weiteren ist die zweite Elektromaschine, die zur Unterstützung des Verbrennungsmotors bei Beschleunigungsvorgängen drehmomentstark ausgeführt ist, relativ groß und schwer ausgebildet.

Der letztgenannte Mangel kann jedoch nach der US 2004/0084233 A1 dadurch behoben werden, dass die zweite Elektromaschine mittels eines zweistufig schaltbaren Planetengetriebes mit der Ausgangswelle des Getriebes verbindbar ist, was eine schnelldrehende und damit kompaktere und leichtere Ausbildung der zweiten Elektromaschine ermöglicht. Hierdurch wird der gesamte Hybrid-Antriebsstrang allerdings deutlich komplexer und damit teurer und störungsanfälliger.

In der EP 0 967 102 A2 ist dagegen ein Hybrid-Antriebsstrang mit einem Verbrennungsmotor und zwei Elektromaschinen beschrieben, bei dem ein aus zwei gekoppelten Planetenradsätzen gebildetes eingangsseitiges Teilgetriebe vorgesehen ist, über das der Verbrennungsmotor und die erste Elektromaschine miteinander in Verbindung stehen, und das zwei koaxiale Abtriebswellen aufweist. Die zweite Elektromaschine ist drehfest mit der äußeren Abtriebswelle verbunden, die über ein als Planetengetriebe ausgebildetes und zwei selektiv schaltbare Schaltelemente aufweisendes ausgangsseitiges Teilgetriebe mit der inneren Abtriebswelle und einer gemeinsamen Ausgangswelle verbindbar ist. Hierdurch kann der Verbrennungsmotor bei einer quasi-stationären Fahrt, d.h. außerhalb von Anfahr- und Beschleunigungsvorgängen, zwar weitgehend konstant mit einer verbrauchsgünstigen Drehzahl betrieben werden. Dieser Antriebsstrang ist aber gegenüber dem vorbeschriebenen Antriebsstrang nochmals komplexer ausgebildet und damit ebenfalls relativ teuer und störungsanfällig. Insgesamt weisen alle bekannten Hybrid-Antriebsstränge jeweils ein spezielles Getriebe für die Verteilung der Antriebskräfte des Verbrennungsmotors und der Elektromaschinen auf. Dies bedingt zwangsläufig einen hohen Entwicklungsaufwand und wegen der relativ geringen Serienstückzahlen auch hohe Herstellungskosten der betreffenden Getriebe.

Es ist daher das Problem der vorliegenden Erfindung, einen mit einem vorhandenen Automatikgetriebe versehenen Antriebsstrang eines Kraftfahrzeugs mit möglichst geringem Aufwand zu einem Hybrid-Antriebsstrang weiterzubilden.

Das Problem wird erfindungsgemäß in Verbindung mit dem Oberbegriff des Anspruchs 1 dadurch gelöst, dass mindestens eines der Schaltelemente des Automatikgetriebes als eine Elektromaschine ausgebildet ist, deren Rotor drehfest mit dem zugeordneten Getriebebauteil und deren Stator drehfest mit dem Getriebegehäuse verbunden ist.

Durch die Ausbildung des betreffenden Schaltelementes als Elektromaschine, die vorzugweise sowohl als Motor als auch als Generator betreibbar ist, wird der Steuerungsbereich des Schaltelementes wesentlich erweitert. So kann neben dem ursprünglich durch das entsprechende Schaltelement in Form einer Schaltkupplung oder einer Schaltbremse eingestellten Betriebspunkt des Getriebes nunmehr eine Vielzahl von Betriebspunkten stufenlos eingestellt werden. Das ursprünglich durch das Automatikgetriebe gebildete Stufengetriebe ist damit zumindest bereichsweise zu einem stufenlosen Getriebe weitergebildet. Die hierzu erforderlichen Änderungen an dem nachfolgend als Basisgetriebe bezeichneten ursprünglichen Automatikgetriebe sind relativ gering: Aufgrund des hohen Anteils an Gleichteilen zu dem Basisgetriebe sind die Produktionskosten des erfindungsgemäßen Hybridantriebs im Vergleich zu bekannten Hybridantrieben sehr gering. Ebenfalls ist der Aufwand für die Entwicklung und die Erprobung des Antriebsstrangs relativ niedrig, da.auf vorhandene und erprobte Planetenradsätze zurückgegriffen werden kann. Im Übrigen weist das Basisgetriebe naturgemäß eine große Spreizung auf, so dass auch die Betriebseigenschaften des erfindungsgemäßen Hybridantriebs im Hinblick auf eine gute Fahrdynamik und einen geringen Kraftstoffverbrauch recht gut sind. Durch den möglichen Wegfall eines hydraulischen Drehmomentwandlers, eines separaten Generators, und eines separaten Starters ergibt sich gegenüber einem mit einem reinen Automatikgetriebe versehenen Antriebsstrang eine Gewichts-, Platz-, und Kostenersparnis.

Vorteilhafte Ausgestaltungen und Weiterbildungen des erfindungsgemäßen Antriebsstrangs sind in den Unteransprüchen angegeben.

Demzufolge ist an der Eingangswelle und / oder der Ausgangswelle des Automatikgetriebes vorteilhaft eine weitere Elektromaschine angeordnet, deren Rotor drehfest mit der betreffenden Welle und deren Stator drehfest mit dem Getriebegehäuse verbunden ist. Diese zusätzliche Elektromaschine dient vorwiegend zur Unterstützung des Verbrennungsmotors bei schnellen Anfahr- und Beschleunigungsvorgängen und zur Rekuperation im Schubbetrieb und bei Bremsvorgängen. Die zusätzliche Elektromaschine kann aber auch bei niedrigerer Fahrgeschwindigkeit, z.B. im Stadtverkehr, als alleiniger Antriebsmotor und, insbesondere bei einer Anordnung an der Eingangswelle, auch als Starter für den Verbrennungsmotor verwendet werden.

Das als Basisgetriebe genutzte Automatikgetriebe kann beispielsweise aus einem eingangsseitigen Teilgetriebe und einem mit diesem gekoppelten ausgangsseitigen Teilgetriebe gebildet sein, wobei das eingangsseitige Teilgetriebe als ein einfacher Planetenradsatz mit einem Sonnenrad, das permanent gegenüber dem Getriebegehäuse festgelegt ist, mit einer Gruppe von Planetenrädern, die mit dem Sonnenrad in Verzahnungseingriff stehen und auf einem gemeinsamen Planetenträger drehbar gelagert sind, und mit einem Hohlrad, das mit den Planetenrädern kämmt und permanent drehfest mit der Eingangswelle verbunden ist, ausgebildet ist, das ausgangsseitige Teilgetriebe als ein Ravigneaux-Radsatz mit einem ersten, radial kleineren Sonnenrad, das mit einer ersten Gruppe axial kurzer Planetenräder kämmt, mit einem zweiten, radial größeren Sonnenrad, das mit einer zweiten Gruppe axial langer Planetenräder kämmt, die jeweils mit einem der axial kurzen Planetenräder in Verzahnungseingriff stehen, mit einem Planetenträger, auf dem die axial kurzen Planetenräder und die axial langen Planetenräder drehbar gelagert sind, und mit einem Hohlrad, das mit den axial langen Planetenrädern kämmt und permanent drehfest mit der Ausgangswelle verbunden ist, ausgebildet ist, und das radial kleinere Sonnenrad des ausgangsseitigen Teilgetriebes mittels einer ersten Schaltkupplung selektiv mit dem Planetenträger des eingangsseitigen Teilgetriebes verbindbar ist, das radial größere Sonnenrad des ausgangsseitigen Teilgetriebes mittels einer zweiten Schaltkupplung selektiv mit dem Planetenträger des eingangsseitigen Teilgetriebes verbindbar ist, der Planetenträger des ausgangsseitigen Teilgetriebes mittels einer dritten Schaltkupplung selektiv mit der Eingangswelle verbindbar ist, das radial größere Sonnenrad des ausgangsseitigen Teilgetriebes mittels einer ersten Schaltbremse selektiv gegenüber dem Getriebegehäuse arretierbar ist, und der Planetenträger des ausgangsseitigen Teilgetriebes mittels einer zweiten Schaltbremse selektiv gegenüber dem Getriebegehäuse arretierbar ist.

In diesem Fall ist zur Bildung eines Hybridantriebs zweckmäßig die zweite Schaltkupplung und die erste Schaltbremse in einem gemeinsamen Schaltelement zusammengefasst, und dieses gemeinsame Schaltelement als eine Elektromaschine ausgebildet. Hierdurch ergibt sich eine Vielzahl von einstellbaren Betriebspunkten, die den Antrieb des radial größeren Sonnenrades des ausgangsseitigen Teilgetriebes mit einer beliebigen Drehzahl und die Arretierung des größeren Sonnenrades beinhalten.

Alternativ dazu ist auch die Ausbildung der ersten Schaltkupplung als eine Elektromaschine möglich, wodurch das radial kleinere Sonnenrad des ausgangsseitigen Teilgetriebes mit einer beliebigen Drehzahl angetrieben werden kann.

In einer weiteren alternativen Ausführung können, auch die dritte Schaltkupplung und die zweite Schaltbremse in einem gemeinsamen, als eine Elektromaschine ausgebildeten Schaltelement zusammengefasst sein. In diesem Fall kann der Planetenträger des ausgangsseitigen Teilgetriebes zur Einstellung einer Vielzahl von Betriebspunkten mit einer beliebigen Drehzahl angetrieben und arretiert werden.

Ebenfalls kann ein Automatikgetriebe als Basisgetriebe genutzt werden, das als ein Ravigneaux-Radsatz entsprechend dem Aufbau des ausgangsseitigen Teilgetriebes des vorbeschriebenen Basisgetriebes ausgebildet ist, bei dem das radial kleinere Sonnenrad mittels einer ersten Schaltkupplung selektiv mit der Eingangswelle verbindbar ist, das radial größere Sonnenrad mittels einer zweiten Schaltkupplung selektiv mit der Eingangswelle verbindbar ist, der Planetenträger mittels einer dritten Schaltkupplung selektiv mit der Eingangswelle verbindbar ist, das radial größere Sonnenrad mittels einer ersten Schaltbremse selektiv gegenüber dem Getriebegehäuse arretierbar ist, und der Planetenträger mittels einer zweiten Schaltbremse selektiv gegenüber dem Getriebegehäuse arretierbar ist.

Auf der Basis dieses Automatikgetriebes kann ein umfassend steuerbarer Hybrid-Antriebsstrang dadurch geschaffen werden, dass die erste Schaltkupplung als eine erste Elektromaschine ausgebildet ist; und dass die zweite Schaltkupplung und die erste Schaltbremse in einem gemeinsamen, als eine zweite Elektromaschine ausgebildeten Schaltelement zusammengefasst sind.

Weitere Einzelheiten der Erfindung ergeben sich aus der nachfolgenden ausführlichen Beschreibung und den beigefügten Zeichnungen, die beispielhaft zur Erläuterung der Erfindung dienen.

Hierzu zeigt:
- Fig. 1: Eine schematische Ansicht einer ersten Ausführung des erfindungsgemäßen Antriebsstrangs, basierend auf dem Automatikgetriebe nach Fig. 8,
- Fig. 2: eine schematische Ansicht einer zweiten Ausführung des erfindungsgemäßen Antriebsstrangs, basierend auf dem Automatikgetriebe nach Fig. 8,
- Fig. 3: eine schematische Ansicht einer dritten Ausführung des erfindungsgemäßen Antriebsstrangs, basierend auf dem Automatikgetriebe nach Fig. 8,
- Fig. 4: eine schematische Ansicht einer vierten Ausführung des erfindungsgemäßen Antriebsstrangs, basierend auf dem Automatikgetriebe nach Fig. 8,
- Fig. 5: eine schematische Ansicht einer fünften Ausführung des erfindungsgemäßen Antriebsstrangs, basierend auf dem Automatikgetriebe nach Fig. 8,
- Fig. 6: eine schematische Ansicht einer sechsten Ausführung des erfindungsgemäßen Antriebsstrangs, basierend auf dem Automatikgetriebe nach Fig. 8,
- Fig. 7: eine schematische Ansicht einer siebten Ausführung des erfindungsgemäßen Antriebsstrangs, basierend auf dem Automatikgetriebe nach Fig. 9,
- Fig. 8: eine schematische Ansicht eines ersten Automatikgetriebes, und
- Fig. 9: eine schematische Ansicht eines zweiten Automatikgetriebes.

Ein beispielhaft als Basisgetriebe ausgewähltes Automatikgetriebe 1' nach Fig: 8 besteht aus einem eingangsseitigen Teilgetriebe 2 und einem ausgangsseitigen Teilgetriebe 3, die in Kraftflussrichtung 9 zwischen einer Eingangswelle 4 und einer Ausgangswelle 5 angeordnet und durch ein selektives Schließen von drei Schaltkupplungen C1, C2, C3 und zwei Schaltbremsen B1, B2 schaltbar sind. Das eingangsseitige Teilgetriebe 2 ist als ein einfacher Planetenradsatz 6 mit einem Sonnenrad S1, das permanent gegenüber dem Getriebegehäuse 8 festgelegt ist, mit einer Gruppe von planetenrädern P1, die mit dem Sonnenrad S1 in Verzahnungseingriff stehen und auf einem gemeinsamen Planetenträger CR1 drehbar gelagert sind, und mit einem Hohlrad R1, das mit den Planetenrädern P1 kämmt und permanent drehfest mit der Eingangswelle 4 verbunden ist, ausgebildet. Das ausgangsseitige Teilgetriebe 3 ist als ein Ravigneaux-Radsatz 7 mit einem ersten, radial kleineren Sonnenrad S2, das mit einer ersten Gruppe axial kurzer Planetenräder P2 kämmt, mit einem zweiten, radial größeren Sonnenrad S3, das mit einer zweiten Gruppe axial langer Planetenräder P3 kämmt, die jeweils mit einem der axial kurzen Planetenräder P2 in Verzahnungseingriff stehen, mit einem Planetenträger CR2, auf dem die axial kurzen Planetenräder P2 und die axial langen Planetenräder P3 drehbar gelagert sind, und mit einem Hohlrad R2, das mit den axial langen Planetenrädern P3 kämmt und permanent drehfest mit der Ausgangswelle 5 verbunden ist, ausgebildet. Das radial kleinere Sonnenrad S2 ist mittels der ersten Schaltkupplung C1 selektiv mit dem Planetenträger CR1 des eingangsseitigen Teilgetriebes 2 verbindbar. Das radial größere Sonnenrad S3 ist mittels der zweiten Schaltkupplung C2 selektiv mit dem Planetenträger CR1 des eingangsseitigen Teilgetriebes 2 verbindbar und mittels der ersten Schaltbremse B1 selektiv gegenüber dem Getriebegehäuse 8 arretierbar. Der Planetenträger CR2 ist mittels der dritten Schaltkupplung C3 selektiv mit der Eingangswelle 4 verbindbar und mittels der zweiten Schaltbremse B2 selektiv und mittels einer Freilaufkupplung F einseitig gegenüber dem Getriebegehäuse 8 arretierbar. Dieses an sich bekannte Automatikgetriebe 1' weist mindestens sechs Vorwärts-Gangstufen und eine Rückwärts-Gangstufe auf.

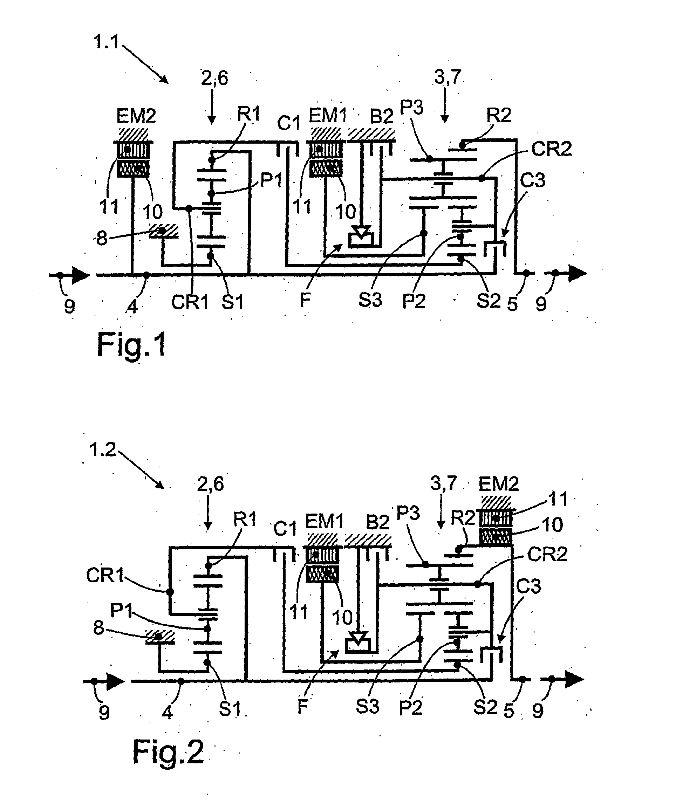

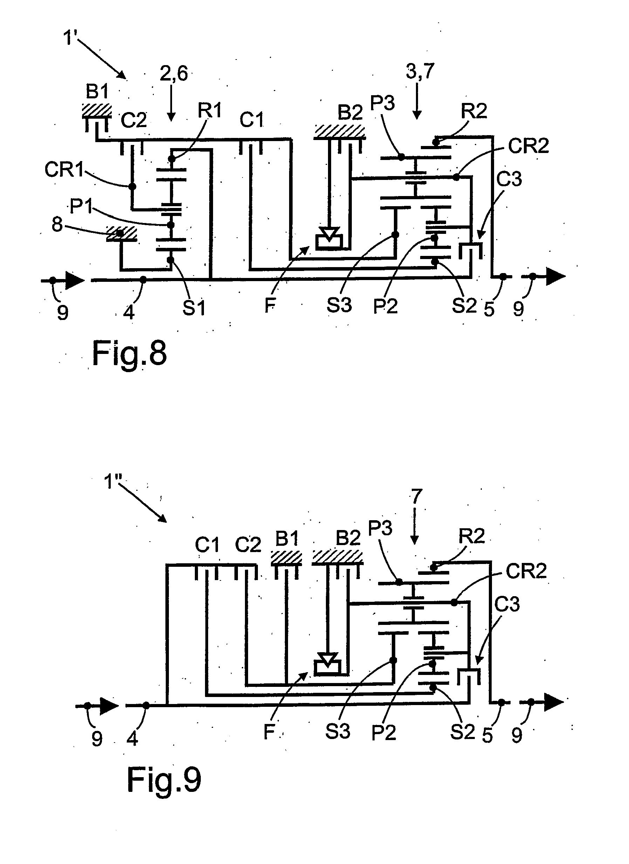

In Fig. 1 ist nun ein erfindungsgemäßer Hybrid-Antriebsstrang 1.1 abgebildet, der auf dem Automatikgetriebe 1' nach Fig. 8 basiert. Bei diesem ist die zweite Schaltkupplung C2 und die erste Schaltbremse B1 des Basisgetriebes 1' durch eine erste Elektromaschine EM1 ersetzt, deren Rotor 10 drehfest mit dem radial größeren Sonnenrad S3 des ausgangsseitigen Teilgetriebes 3 verbunden ist, und deren Stator 11 drehfest mit dem Getriebegehäuse 8 verbunden ist. An der Eingangswelle 4 ist eine weitere zweite Elektromaschine EM2 angeordnet, deren Rotor 10 drehfest mit des Eingangswelle 4 und deren Stator 11 drehfest mit dem Getriebegehäuse 8 verbunden ist.

In der Fig. 2 ist ein ähnlicher Hybrid-Antriebsstrang 1.2 wiedergegeben, der sich von der Ausführung nach Fig. 1 dadurch unterscheidet, dass die zweite Elektromaschine EM2 an der Ausgangswelle 5 angeordnet ist.

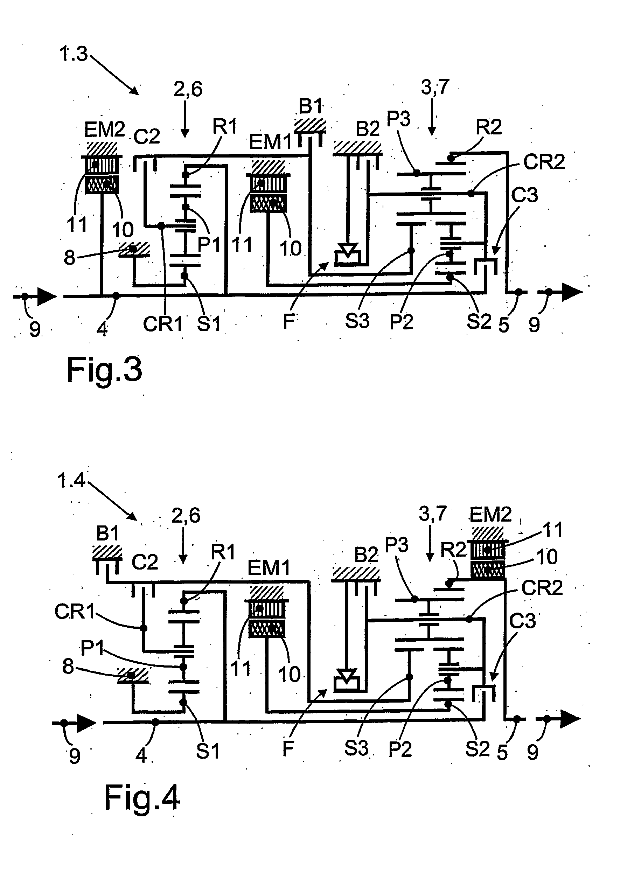

In Fig. 3 ist eine Ausführung des erfindungsgemäßen Hybrid-Antriebsstrangs 1.3 abgebildet, die auch auf dem Automatikgetriebe 1' nach Fig. 8 basiert. Bei dieser Ausführung ist die erste Schaltkupplung C1 des Basisgetriebes 1' durch eine erste Elektromaschine EM1 ersetzt, deren Rotor 10 drehfest mit dem radial kleineren Sonnenrad S2 des ausgangsseitigen Teilgetriebes 3 verbunden ist, und deren Stator 11 drehfest mit dem Getriebegehäuse 8 verbunden ist. An der Eingangswelle 4 ist eine weitere zweite Elektromaschinen EM2 angeordnet, deren Rotor 10 drehfest mit der Eingangswelle 4 und deren Stator 11 drehfest mit dem Getriebegehäuse 8 verbunden ist.

In der Fig. 4 ist ein ähnlicher Hybrid-Antriebsstrang 1.4 wiedergegeben, der sich von der Ausführung nach Fig. 3 nur dadurch unterscheidet, dass die zweite Elektromaschine EM2 an der Ausgangswelle 5 angeordnet ist.

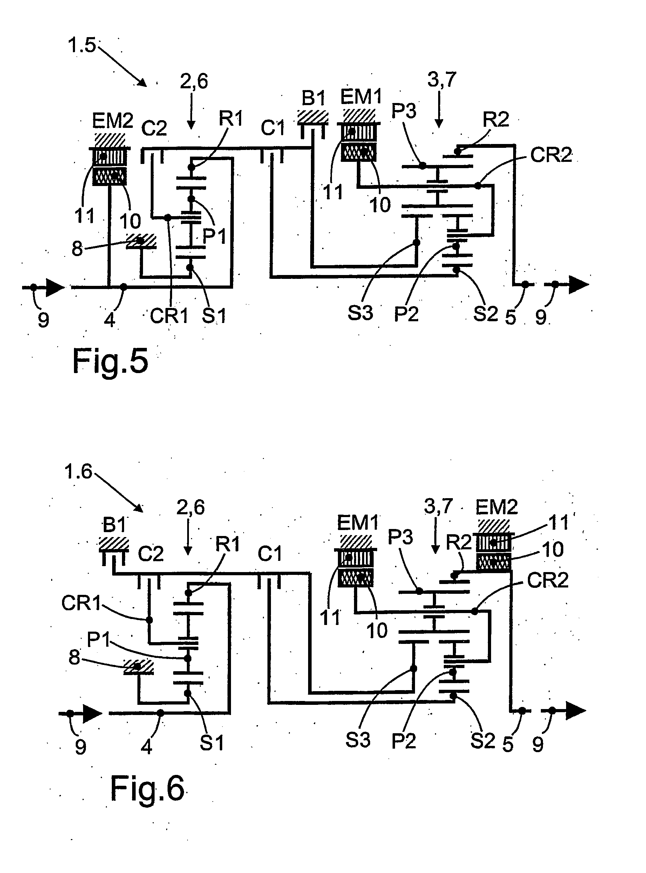

In Fig. 5 ist eine weitere Ausführung des erfindungsgemäßen Hybrid-Antriebsstrangs 1.5 abgebildet, die ebenfalls auf dem Automatikgetriebe 1' nach Fig. 8 basiert. Bei dieser Ausführung ist die dritte Schaltkupplung C3 und die zweite Schaltbremse B2 des Basisgetriebes 1' durch eine erste Elektromaschine EM1 ersetzt, deren Rotor 10 drehfest mit dem Planetenträger CR2 des ausgangsseitigen Teilgetriebes 3 verbunden ist, und deren Stator 11 drehfest mit dem Getriebegehäuse 8 verbunden ist. An der Eingangswelle 4 ist eine weitere zweite Elektromaschine EM2 angeordnet, deren Rotor 10 drehfest mit der Eingangswelle 4 und deren Stator 11 drehfest mit dem Getriebegehäuse 8 verbunden ist.

In der Fig. 6 ist ein ähnlicher Hybrid-Antriebsstrang 1.6 wiedergegeben, der sich von der Ausführung nach Fig. 1 nur dadurch unterscheidet, dass die zweite Elektromaschine EM2 an der Ausgangswelle 5 angeordnet ist.

Ein als zweites Beispiel für ein Basisgetriebe ausgewähltes Automatikgetriebe 1" nach Fig. 9 ist als ein Ravigneaux-Radsatz 7 ausgebildet, das in seinem Aufbau weitgehend mit dem ausgangsseitigen Teilgetriebe 3 nach Fig. 8 übereinstimmt, so dass zur besseren Vergleichbarkeit in Fig. 9 dieselben Bezugszeichen verwendet werden. Das Automatikgetriebe 1" ist mit einem ersten, radial kleineren Sonnenrad S2, das mit einer ersten Gruppe axial kurzer Planetenräder P2 kämmt, mit einem zweiten, radial größeren Sonnenrad S3, das mit einer zweiten Gruppe axial langer Planetenräder P3 kämmt, die jeweils mit einem der axial kurzen Planetenräder P2 in Verzahnungseingriff stehen, mit einem Planetenträger CR2, auf dem die axial kurzen Planetenräder P2 und die axial langen Planetenräder P3 drehbar gelagert sind, und mit einem Hohlrad R2, das mit den axial-langen Planetenrädern P3 kämmt und permanent drehfest mit der Ausgangswelle 5 verbunden ist, versehen. Das radial kleinere Sonnenrad S2 ist mittels einer ersten Schaltkupplung C1 selektiv mit der Eingangswelle 4 verbindbar. Das radial größere Sonnenrad S3 ist mittels einer zweiten Schaltkupplung C2 selektiv mit der Eingangswelle 4 verbindbar und mittels einer ersten Schaltbremse B1 selektiv gegenüber dem Getriebegehäuse 8 arretierbar. Der Planetenträger CR2 ist mittels einer dritten Schaltkupplung C3 selektiv mit der Eingangswelle 4 verbindbar und mittels einer zweiten Schaltbremse B2 selektiv und mittels einer Freilaufkupplung F einseitig gegenüber dem Getriebegehäuse 8 arretierbar. Dieses an sich bekannte Automatikgetriebe 1" weist mindestens drei Vorwärts-Gangstufen und eine Rückwärts-Gangstufe auf.

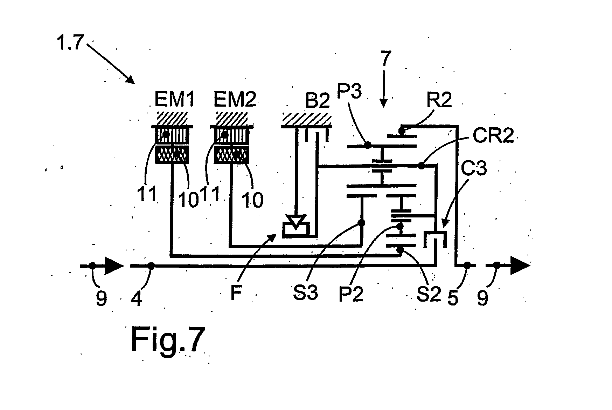

In Fig. 7 ist nun ein erfindungsgemäßer Hybrid-Antriebsstrang 1.7 abgebildet, der auf dem Automatikgetriebe 1" nach Fig. 9 basiert. Bei diesem ist die erste Schaltkupplung C1 durch eine erste Elektromaschine EM1 ersetzt, deren Rotor 10 drehfest mit dem radial kleineren Sonnenrad S2 und deren Stator 11 drehfest mit dem Getriebegehäuse 8 verbunden ist. Anstelle der zweiten Schaltkupplung C2 und der ersten Schaltbremse B1 ist eine zweite Elektromaschine EM2 vorgesehen, deren Rotor 10 drehfest mit dem radial größeren Sonnenrad S3 und deren Stator 11 drehfest mit dem Getriebegehäuse 8 verbunden ist.

Durch die beispielhaft beschriebenen Ausführungen des erfindungsgemäßen Antriebsstrangs 1.1-1.7 ist ein jeweils auf einem bekannten und somit erprobtem Automatikgetriebe 1', 1" basierender Hybridantrieb geschaffen, der eine große Getriebespreizung aufweist, im Fahrbetrieb weitgehend stufenlos steuerbar ist, und aufgrund des hohen Anteils an Gleichteilen mit dem jeweiligen Basisgetriebe kostengünstig herstellbar ist.

### Bezugszeichenliste

- 1.1: Hybrid-Antriebsstrang
- 1.2: Hybrid-Antriebsstrang
- 1.3: Hybrid-Antriebsstrang
- 1.4: Hybrid-Antriebsstrang
- 1.5: Hybrid-Antriebsstrang
- 1.6: Hybrid-Antriebsstrang
- 1.7: Hybrid-Antriebsstrang
- 1': Automatikgetriebe, Basisgetriebe
- 1": Automatikgetriebe, Basisgetriebe
- 2: (eingangsseitiges) Teilgetriebe
- 3: (ausgangsseitiges) Teilgetriebe
- 4: Eingangswelle
- 5: Ausgangswelle
- 6: einfacher Planetenradsatz
- 7: Ravigneaux-Radsatz
- 8: Getriebegehäuse
- 9: Kraftflussrichtung
- 10: Rotor
- 11: Stator
- B1: (erste) Schaltbremse
- B2: (zweite) Schaltbremse
- C1: (erste) Schaltkupplung
- C2: (zweite) Schaltkupplung
- C3: (dritte) Schaltkupplung
- CR1: (erster) Planetenträger
- CR2: (zweiter) Planetenträger
- EM1: (erste) Elektromaschine
- EM2: (zweite) Elektromaschine
- F: Freilaufkupplung
- P1: (erstes) Planetenrad
- P2: (zweites) Planetenrad
- P3: (drittes) Planetenrad
- R1: (erstes) Hohlrad
- R2: (zweites) Hohlrad
- S1: (erstes) Sonnenrad
- S2: (zweites) Sonnenrad
- S3: (drittes) Sonnenrad

## Patentansprüche

1. Antriebsstrang eines Kraftfahrzeugs, mit einem als Verbrennungsmotor ausgebildeten Antriebsmotor und einem mehrstufigen Automatikgetriebe, das mehrere zwischen einer Eingangswelle und einer Ausgangswelle angeordnete und miteinander gekoppelte Planetengetriebe aufweist, die jeweils als Getriebebauteile mindestens ein außenverzahntes Sonnenrad, einen mehrere außenverzahnte Planetenräder tragenden Planetenträger und ein innenverzahntes Hohlrad enthalten, und die zur Einstellung verschiedener Gangstufen zumindest teilweise über mehrere, jeweils mit einem der Getriebebauteile in Verbindung stehende Schaltelemente schaltbar sind, wobei das Automatikgetriebe (1') aus einem eingangsseitigen Teilgetriebe (2) und einem mit diesem gekoppelten ausgangsseitigen Teilgetriebe (3) gebildet ist, wobei
- das eingangsseitige Teilgetriebe (2) als ein einfacher Planetenradsatz (6) mit einem Sonnenrad (S1), das permanent gegenüber dem Getriebegehäuse (8) festgelegt ist, mit einer Gruppe von Planetenrädern (P1), die mit dem Sonnenrad (S1) in Verzahnungseingriff stehen und auf einem gemeinsamen Planetenträger (CR1) drehbar gelagert sind, und mit einem Hohlrad (R1), das mit den Planetenrädern (P1) kämmt und permanent drehfest mit der Eingangswelle (4) verbunden ist, ausgebildet ist,
- das ausgangsseitige Teilgetriebe (3) als ein Ravigneaux-Radsatz (7) mit einem ersten, radial kleineren Sonnenrad (S2), das mit einer ersten Gruppe axial kurzer Planetenräder (P2) kämmt, mit einem zweiten, radial größeren Sonnenrad (S3), das mit einer zweiten Gruppe axial langer Planetenräder (P3) kämmt, die jeweils mit einem der axial kurzen Planetenräder (P2) in Verzahnungseingriff stehen, mit einem Planetenträger (CR2), auf dem die axial kurzen Planetenräder (P2) und die axial langen Planetenräder (P3) drehbar gelagert sind, und mit einem Hohlrad (R2), das mit den axial langen Planetenrädern (P3) kämmt und permanent drehfest mit der Ausgangswelle (5) verbunden ist, ausgebildet ist
und wobei
- das radial kleinere Sonnenrad (S2) des ausgangsseitigen Teilgetriebes (3) mittels einer ersten Schaltkupplung (C1) selektiv mit dem Planetenträger (CR1) des eingangsseitigen Teilgetriebes (2) verbindbar ist,
- der Planetenträger (CR2) des ausgangsseitigen Teilgetriebes (3) mittels einer dritten Schaltkupplung (C3) selektiv mit der Eingangswelle (4) verbindbar ist,
- der Planetenträger (CR2) des ausgangsseitigen Teilgetriebes (3) mittels einer zweiten Schaltbremse (B2) selektiv gegenüber dem Getriebegehäuse (8) arretierbar ist,
- das radial größere Sonnenrad (S3) des ausgangsseitigen Teilgetriebes (3) drehfest mit dem Rotor (10) einer ersten Elektromaschine (EM1) verbunden ist, deren Stator (11) drehfest mit dem Getriebegehäuse verbunden ist.

2. Antriebsstrang eines Kraftfahrzeugs, mit einem als Verbrennungsmotor ausgebildeten Antriebsmotor und einem mehrstufigen Automatikgetriebe, das mehrere zwischen einer Eingangswelle und einer Ausgangswelle angeordnete und miteinander gekoppelte Planetengetriebe aufweiset, die jeweils als Getriebebauteile mindestens ein außenverzahntes Sonnenrad, einen mehrere außenverzahnte Planetenräder tragenden Planetenträger und ein innenverzahntes Hohlrad enthalten, und die.zur Einstellung verschiedener Gangstufen zumindest teilweise über mehrere, jeweils mit einem der Getriebebauteile in Verbindung stehende Schaltelemente schaltbar sind, wobei das Automatikgetriebe (1') aus einem eingangsseitigen Teilgetriebe (2) und einem mit diesem gekoppelten ausgangsseitigen Teilgetriebe (3) gebildet ist, wobei
- das eingangsseitige Teilgetriebe (2) als ein einfacher Planetenradsatz (6) mit einem Sonnenrad (S1), das permanent gegenüber dem Getriebegehäuse (8) festgelegt ist, mit einer Gruppe von Planetenrädern (P1), die mit dem Sonnenrad (S1) in Verzahnungseingriff stehen und auf einem gemeinsamen Planetenträger (CR1) drehbar gelagert sind, und mit einem Hohlrad (R1), das mit den Planetenrädern (P1) kämmt und permanent drehfest mit der Eingangswelle (4) verbunden ist, ausgebildet ist,
- das ausgangsseitige Teilgetriebe (3) als ein Ravigneaux-Radsatz (7) mit einem ersten, radial kleineren Sonnenrad (S2), das mit einer ersten Gruppe axial kurzer Planetenräder (P2) kämmt, mit einem zweiten, radial größeren Sonnenrad (S3), das mit einer zweiten Gruppe axial langer Planetenräder (P3) kämmt, die jeweils mit einem der axial kurzen Planetenräder (P2) in Verzahnungseingriff stehen, mit einem Planetenträger (CR2), auf dem die axial kurzen Planetenräder (P2) und die axial langen Planetenräder (P3) drehbar gelagert sind, und mit einem Hohlrad (R2), das mit den axial langen Planetenrädern (P3) kämmt und permanent drehfest mit der Ausgangswelle (5) verbunden ist, ausgebildet ist
und wobei
- das radial größere Sonnenrad (S3) des ausgangsseitigen Teilgetriebes (3) mittels einer zweiten Schaltkupplung (C2) selektiv mit dem Planetenträger (CR1) des eingangsseitigen Teilgetriebes (2) verbindbar ist,
- der Planetenträger (CR2) des ausgangsseitigen Teilgetriebes (3) mittels einer dritten Schaltkupplung (C3) selektiv mit der Eingangswelle (4) verbindbar ist,
- das radial größere Sonnenrad (S3) des ausgangsseitigen Teilgetriebes (3) mittels einer ersten Schaltbremse (B1) selektiv gegenüber dem Getriebegehäuse (8) arretierbar ist und
- der Planetenträger (CR2) des ausgangsseitigen Teilgetriebes (3) mittels einer zweiten Schaltbremse (B2) selektiv gegenüber dem Getriebegehäuse (8) arretierbar ist,
- das radial kleinere Sonnenrad (S2) des ausgangsseitigen Teilgetriebes (3) drehfest mit dem Rotor (10) einer ersten Elektromaschine (EM1) verbunden ist, deren Stator (11) drehfest mit dem Getriebegehäuse verbunden ist.

3. Antriebsstrang eines Kraftfahrzeugs, mit einem als Verbrennungsmotor ausgebildeten Antriebsmotor und einem mehrstufigen Automatikgetriebe, das mehrere zwischen einer Eingangswelle und einer Ausgangswelle angeordnete und miteinander gekoppelte Planetengetriebe aufweist, die jeweils als Getriebebauteile mindestens ein außenverzahntes Sonnenrad, einen mehrere außenverzahnte Planetenräder tragenden Planetenträger und ein innenverzahntes Hohlrad enthalten, und die zur Einstellung verschiedener Gangstufen zumindest teilweise über mehrere, jeweils mit einem der Getriebebauteile in Verbindung stehende Schaltelemente schaltbar sind, wobei das Automatikgetriebe (1') aus einem eingangsseitigen Teilgetriebe (2) und einem mit diesem gekoppelten ausgangsseitigen Teilgetriebe (3) gebildet ist, wobei
- das eingangsseitige Teilgetriebe (2) als ein einfacher Planetenradsatz (6) mit einem Sonnenrad (S1), das permanent gegenüber dem Getriebegehäuse (8) festgelegt ist, mit einer Gruppe von Planetenrädern (P1), die mit dem Sonnenrad (S1) in Verzahnungseingriff stehen und auf einem gemeinsamen Planetenträger (CR1) drehbar gelagert sind, und mit einem Hohlrad (R1), das milden Planetenrädern (P1) kämmt und permanent drehfest mit der Eingangswelle (4) verbunden ist, ausgebildet ist,
- das ausgangsseitige Teilgetriebe (3) als ein Ravigneaux-Radsatz (7) mit einem ersten, radial kleineren Sonnenrad (S2), das mit einer ersten Gruppe axial kurzer Planetenräder (P2) kämmt, mit einem zweiten, radial größeren Sonnenrad (S3), das mit einer zweiten Gruppe axial langer Planetenräder (P3) kämmt, die jeweils mit einem der axial kurzen Planetenräder (P2) in Verzahnungseingriff stehen, mit einem Planetenträger (CR2), auf dem die axial kurzen Planetenräder (P2) und die axial langen Planetenräder (P3) drehbar gelagert sind, und mit einem Hohlrad (R2), das mit den axial langen Planetenrädern (P3) kämmt und permanent drehfest mit der Ausgangswelle (5) verbunden ist, ausgebildet ist
und wobei
- das radial kleinere Sonnenrad (S2) des ausgangsseitigen Teilgetriebes (3) mittels einer ersten Schaltkupplung (C1) selektiv mit dem Planetenträger (CR1) des eingangsseitigen Teilgetriebes (2) verbindbar ist,
- das radial größere Sonnenrad (S3) des ausgangsseitigen Teilgetriebes (3) mittels einer zweiten Schaltkupplung (C2) selektiv mit dem Planetenträger (CR1) des eingangsseitigen Teilgetriebes (2) verbindbar ist,
- das radial größere Sonnenrad (S3) des ausgangsseitigen Teilgetriebes (3) mittels einer ersten Schaltbremse (B1) selektiv gegenüber dem Getriebegehäuse (8) arretierbar ist und
- der Planetenträger (CR2) des ausgangsseitigen Teilgetriebes (3) drehfest mit dem Rotor (10) einer ersten Elektromaschine (EM1) verbunden ist, deren Stator (11) drehfest mit dem Getriebegehäuse verbunden ist.

4. Antriebsstrang nach einem der vorangehenden Ansprüche,
**dadurch gekennzeichnet,**
**dass** an der Eingangswelle (4) des Automatikgetriebes (1') eine weitere Elektromaschine (EM2) angeordnet ist, deren Rotor (10) drehfest mit der Eingangswelle (4) und deren Stator (11) drehfest mit dem Getriebegehäuse (8) verbunden ist.

5. Antriebsstrang einem der Ansprüche 1 bis 3,
**dadurch gekennzeichnet,**
**dass** an der Ausgangswelle, (5) des Automatikgetriebes (1') eine weitere Elektromaschine (EM2) angeordnet ist, deren Rotor (10) drehfest mit der Ausgangswelle (5) und deren Stator (11) drehfest mit dem Getriebegehäuse (8) verbunden ist.

6. Antriebsstrang eines Kraftfahrzeugs, mit einem als Verbrennungsmotor ausgebildeten Antriebsmotor und einem mehrstufigen Automatikgetriebe, das mehrere zwischen einer Eingangswelle und einer Ausgangswelle angeordnete und miteinander gekoppelte Planetengetriebe aufweist, die jeweils als Getriebebauteile mindestens ein außenverzahntes Sonnenrad, einen mehrere außenverzahnte Planetenräder tragenden Planetenträger und ein innenverzahntes Hohlrad enthalten, und die zur Einstellung verschiedener Gangstufen zumindest teilweise über mehrere, jeweils mit einem der Getriebebauteile in Verbindung stehende Schaltelemente schaltbar sind, wobei das Automatikgetriebe (1") als ein Ravigneaux-Rädsatz (7) ausgebildet ist
- mit einem ersten, radial kleineren Sonnenrad (S2), das mit einer ersten Gruppe axial kurzer Planetenräder (P2) kämmt,
- mit einem zweiten, radial größeren Sonnenrad (S3), das mit einer zweiten Gruppe axial langer Planetenräder (P3) kämmt; die jeweils mit einem der axial kurzen Planetenräder (P2) in Verzahnungseingriff stehen,
- mit einem Planetenträger (CR2), auf dem die axial kurzen Planetenräder (P2) und die axial langen Planetenräder (P3) drehbar gelagert sind; und
- mit einem Hohlrad (R2), das mit den axial langen Planetenrädern (P3) kämmt und permanent drehfest mit der Ausgangswelle (5) verbunden ist
und wobei
- der Planetenträger (CR2) mittels einer dritten Schaltkupplung (C3) selektiv mit der Eingangswelle (4) verbindbar ist,
- oder Planetenträger (CR2) mittels einer zweiten Schaltbremse (B2) selektiv gegenüber dem Getriebegehäuse (8) arretierbar ist und
- das radial kleinere Sonnenrad (S2) drehfest mit dem Rotor (10) einer ersten Elektromaschine (EM1) verbunden ist, deren Stator (11) drehfest mit dem Getriebegehäuse verbunden ist und
- das radial größere Sonnenrad (S3) drehfest mit dem Rotor (10) einer zweiten Elektromaschine (EM2) verbunden ist, deren Stator (11) drehfest mit dem Getriebegehäuse verbunden ist.

7. Antriebsstrang nach einem der vorangehenden Ansprüche,
**dadurch gekennzeichnet,**
**dass** zumindest eine Elektromaschine (EM1, EM2) sowohl als Motor als auch als - Generator betreibbar ist.

## Claims

1. Drivetrain of a motor vehicle, having a drive engine which is embodied as an internal combustion engine and having a multi-step automatic transmission which has a plurality of planetary gearings which are arranged between an input shaft and an output shaft and which are coupled to one another and which each comprise, as gearing components, at least one externally-toothed sun gear, a planet carrier which supports a plurality of externally-toothed planet gears, and an internally-toothed ring gear, and which planetary gearings can, to set different gear stages, be at least partially shifted by means of a plurality of shift elements which are connected in each case to one of the gearing components, with the automatic transmission (1') being formed from an input-side partial transmission (2) and an output-side partial transmission (3) which is coupled to said input-side partial transmission (2),
- with the input-side partial transmission (2) being designed as a simple planetary gear set (6) with a sun gear (S1) which is permanently fixed with respect to the transmission housing (8), having a group of planet gears (P1) which are in toothed engagement with the sun gear (S1) and which are rotatably mounted on a common planet carrier (CR1), and having a ring gear (R1) which meshes with the planet gears (P1) and which is permanently rotationally fixedly connected to the input shaft (4),
- with the output-side partial transmission (3) being designed as a Ravigneaux gear set (7) with a first, radially relatively small sun gear (S2) which meshes with a first group of axially short planet gears (P2), having a second, radially relatively large sun gear (S3) which meshes with a second group of axially long planet gears (P3) which are in each case in toothed engagement with one of the axially short planet gears (P2), having a planet carrier (CR2) on which the axially short planet gears (P2) and the axially long planet gears (P3) are rotatably mounted, and having a ring gear (R2) which meshes with the axially long planet gears (P3) and which is permanently rotationally fixedly connected to the output shaft (5),
and
- with it being possible for the radially relatively small sun gear (S2) of the output-side partial transmission (3) to be selectively connected by means of a first shift clutch (C1) to the planet carrier (CR1) of the input-side partial transmission (2),
- with it being possible for the planet carrier (CR2) of the output-side partial transmission (3) to be selectively connected by means of a third shift clutch (C3) to the input shaft (4),
- with it being possible for the planet carrier (CR2) of the output-side partial transmission (3) to be selectively locked with respect to the transmission housing (8) by means of a second shift brake (B2),
- with the radially relatively large sun gear (S3) of the output-side partial transmission (3) being rotationally fixedly connected to the rotor (10) of a first electric machine (EM1) whose stator (11) is rotationally fixedly connected to the transmission housing.

2. Drivetrain of a motor vehicle, having a drive engine which is embodied as an internal combustion engine and having a multi-step automatic transmission which has a plurality of planetary gearings which are arranged between an input shaft and an output shaft and which are coupled to one another and which each comprise, as gearing components, at least one externally-toothed sun gear, a planet carrier which supports a plurality of externally-toothed planet gears, and an internally-toothed ring gear, and which planetary gearings can, to set different gear stages, be at least partially shifted by means of a plurality of shift elements which are connected in each case to one of the gearing components, with the automatic transmission (1') being formed from an input-side partial transmission (2) and an output-side partial transmission (3) which is coupled to said input-side partial transmission (2),
- with the input-side partial transmission (2) being designed as a simple planetary gear set (6) with a sun gear (S1) which is permanently fixed with respect to the transmission housing (8), having a group of planet gears (P1) which are in toothed engagement with the sun gear (S1) and which are rotatably mounted on a common planet carrier (CR1), and having a ring gear (R1) which meshes with the planet gears (P1) and which is permanently rotationally fixedly connected to the input shaft (4),
- with the output-side partial transmission (3) being designed as a Ravigneaux gear set (7) with a first, radially relatively small sun gear (S2) which meshes with a first group of axially short planet gears (P2), having a second, radially relatively large sun gear (S3) which meshes with a second group of axially long planet gears (P3) which are in each case in toothed engagement with one of the axially short planet gears (P2), having a planet carrier (CR2) on which the axially short planet gears (P2) and the axially long planet gears (P3) are rotatably mounted, and having a ring gear (R2) which meshes with the axially long planet gears (P3) and which is permanently rotationally fixedly connected to the output shaft (5),
and
- with it being possible for the radially relatively large, sun gear (S3) of the output-side partial transmission (3) to be selectively connected by means of a second shift clutch (C2) to the planet carrier (CR1) of the input-side partial transmission (2),
- with it being possible for the planet carrier (CR2) of the output-side partial transmission (3) to be selectively connected by means of a third shift clutch (C3) to the input shaft (4),
- with it being possible for the radially relatively large sun gear (S3) of the output-side partial transmission (3) to be selectively locked with respect to the transmission housing (8) by means of a first shift brake (B1), and
- with it being possible for the planet carrier (CR2) of the output-side partial transmission (3) to be selectively locked with respect to the transmission housing (8) by means of a second shift brake (B2),
- with the radially relatively small sun gear (S2) of the output-side partial transmission (3) being rotationally fixedly connected to the rotor (10) of a first electric machine (EM1) whose stator (11) is rotationally fixedly connected to the transmission housing.

3. Drivetrain of a motor vehicle, having a drive engine which is embodied as an internal combustion engine and having a multi-step automatic transmission which has a plurality of planetary gearings which are arranged between an input shaft and an output shaft and which are coupled to one another and which each comprise, as gearing components, at least one externally-toothed sun gear, a planet carrier which supports a plurality of externally-toothed planet gears, and an internally-toothed ring gear, and which planetary gearings can, to set different gear stages, be at least partially shifted by means of a plurality of shift elements which are connected in each case to one of the gearing components, with the automatic transmission (1') being formed from an input-side partial transmission (2) and an output-side partial transmission (3) which is coupled to said input-side partial transmission (2),
- with the input-side partial transmission (2) being designed as a simple planetary gear set (6) with a sun gear (S1) which is permanently fixed with respect to the transmission housing (8), having a group of planet gears (P1) which are in toothed engagement with the sun gear (S1) and which are rotatably mounted on a common planet carrier (CR1), and having a ring gear (R1) which meshes with the planet gears (P1) and which is permanently rotationally fixedly connected to the input shaft (4),
- with the output-side partial transmission (3) being designed as a Ravigneaux gear set (7) with a first, radially relatively small sun gear (S2) which meshes with a first group of axially short planet gears (P2), having a second, radially relatively large sun gear (S3) which meshes with a second group of axially long planet gears (P3) which are in each case in toothed engagement with one of the axially short planet gears (P2), having a planet carrier (CR2) on which the axially short planet gears (P2) and the axially long planet gears (P3) are rotatably mounted, and having a ring gear (R2) which meshes with the axially long planet gears (P3) and which is permanently rotationally fixedly connected to the output shaft (5),
and
- with it being possible for the radially relatively small sun gear (S2) of the output-side partial transmission (3) to be selectively connected by means of a first shift clutch (C1) to the planet carrier (CR1) of the input-side partial transmission (2),
- with it being possible for the radially relatively large sun gear (S3) of the output-side partial transmission (3) to be selectively connected by means of a second shift clutch (C2) to the planet carrier (CR1) of the input-side partial transmission (2),
- with it being possible for the radially relatively large sun gear (S3) of the output-side partial transmission (3) to be selectively locked with respect to the transmission housing (8) by means of a first shift brake (B1), and
- with the planet carrier (CR2) of the output-side partial transmission (3) being rotationally fixedly connected to the rotor (10) of a first electric machine (EM1) whose stator (11) is rotationally fixedly connected to the transmission housing.

4. Drivetrain according to one of the preceding claims,
**characterized**
**in that** a further electric machine (EM2) is arranged on the input shaft (4) of the automatic transmission (1'), the rotor (10) of which further electric machine (EM2) is rotationally fixedly connected to the input shaft (4), and the stator (11) of which further electric machine (EM2) is rotationally fixedly connected to the transmission housing (8).

5. Drivetrain according to one of Claims 1 to 3,
**characterized**
**in that** a further electric machine (EM2) is arranged on the output shaft (5) of the automatic transmission (1'), the rotor (10) of which further electric machine (EM2) is rotationally fixedly connected to the output shaft (5), and the stator (11) of which further electric machine (EM2) is rotationally fixedly connected to the transmission housing (8).

6. Drivetrain of a motor vehicle, having a drive engine which is embodied as an internal combustion engine and having a multi-step automatic transmission which has a plurality of planetary gearings which are arranged between an input shaft and an output shaft and which are coupled to one another and which each comprise, as gearing components, at least one externally-toothed sun gear, a planet carrier which supports a plurality of externally-toothed planet gears, and an internally-toothed ring gear, and which planetary gearings can, to set different gear stages, be at least partially shifted by means of a plurality of shift elements which are connected in each case to one of the gearing components, with the automatic transmission (1") being designed as a Ravigneaux gear set (7),
- having a first, radially relatively small sun gear (S2) which meshes with a first group of axially short planet gears (P2),
- having a second, radially relatively large sun gear (S3) which meshes with a second group of axially long planet gears (P3) which are in each case in toothed engagement with one of the axially short planet gears (P2),
- having a planet carrier (CR2) on which the axially short planet gears (P2) and the axially long planet gears (P3) are rotatably mounted,
- and having a ring gear (R2) which meshes with the axially long planet gears (P3) and which is permanently rotationally fixedly connected to the output shaft (5),
and
- with it being possible for the planet carrier (CR2) to be selectively connected by means of a third shift clutch (C3) to the input shaft (4),
- with it being possible for the planet carrier (CR2) to be selectively locked with respect to the transmission housing (8) by means of a second shift brake (B2), and
- with the radially relatively small sun gear (S2) being rotationally fixedly connected to the rotor (10) of a first electric machine (EM1) whose stator (11) is rotationally fixedly connected to the transmission housing, and
- with the radially relatively large sun gear (S3) being rotationally fixedly connected to the rotor (10) of a second electric machine (EM2) whose stator (11) is rotationally fixedly connected to the transmission housing.

7. Drivetrain according to one of the preceding claims,
**characterized**
**in that** at least one electric machine (EM1, EM2) can be operated both as a motor and as a generator.

## Revendications

1. Chaîne de transmission d'un véhicule automobile, comprenant un moteur d'entraînement réalisé sous forme de moteur à combustion interne et une boîte de vitesses automatique à plusieurs rapports, qui présente plusieurs engrenages planétaires disposés entre un arbre d'entrée et un arbre de sortie et accouplés les uns aux autres, qui contiennent à chaque fois en tant que composants de boîte de vitesses au moins une roue solaire à denture extérieure, un porte-satellites portant plusieurs pignons planétaires à denture extérieure et une couronne à denture intérieure, et.qui peuvent être commutés pour l'ajustement de différents rapports de vitesse au moins en partie par le biais de plusieurs éléments de commutation en liaison à chaque fois avec l'un des composants de la boîte de vitesses, la boîte de vitesses automatique (1') étant formée par une boîte de vitesses partielle (2) du côté de l'entrée et par une boîte de vitesses partielle (3) du côté de la sortie et accouplée à celle-ci,
- la boîte de vitesses partielle (2) du côté de l'entrée étant réalisée sous forme de train planétaire simple (6) avec une roue solaire (S1), qui est fixée de manière permanente par rapport au boîtier de la boîte de vitesses (8), avec un groupe de pignons planétaires (P1), qui sont en engagement denté avec la roue solaire (S1) et qui sont montés à rotation sur un porte-satellites commun (CR1), et avec une couronne (R1), qui s'engrène avec les pignons planétaires (P1) et qui est connectée de manière permanente solidaire en rotation avec l'arbre d'entrée (4),
- la boîte de vitesses partielle (3) du côté de la sortie étant réalisée sous forme d'un train de Ravigneaux (7) avec une première roue solaire (S2) radialement plus petite, qui s'engrène avec un premier groupe de pignons planétaires (P2) axialement courts, avec une deuxième roue solaire (S3) radialement plus grande, qui s'engrène avec un deuxième groupe de pignons planétaires (P3) axialement longs, qui sont en engagement denté à chaque fois avec l'un des pignons planétaires (P2) axialement courts, avec un porte-satellites (CR2), sur lequel les pignons planétaires axialement courts (P2) et les pignons planétaires axialement longs (P3) sont montés à rotation, et avec une couronne (R2) qui s'engrène avec les pignons planétaires (P3) axialement longs et qui est connectée de manière permanente solidaire en rotation avec l'arbre de sortie (5),
et
- la roue solaire (S2) radialement plus petite de la boîte de vitesses partielle (3) du côté de la sortie pouvant être connectée au moyen d'un premier embrayage (C1) de manière sélective au porte-satellites (CR1) de la boîte de vitesses partielle (2) du côté de l'entrée,
- le porte-satellites (CR2) de la boîte de vitesses partielle (3) du côté de la sortie pouvant être connecté de manière sélective à l'arbre d'entrée (4) au moyen d'un troisième embrayage (C3),
- le porte-satellites (CR2) de la boîte de vitesses partielle (3) du côté de la sortie pouvant être bloqué au moyen d'un deuxième frein de changement de vitesse (B2) de manière sélective par rapport au boîtier de la boîte de vitesses (8),
- la roue solaire (S3) radialement plus grande de la boîte de vitesses partielle (3) du côté de la sortie étant connectée de manière solidaire en rotation au rotor (10) d'une première machine électrique (EM1), dont le stator (11) est connecté de manière solidaire en rotation au boîtier de la boîte de vitesses.

2. Chaîne de transmission d'un véhicule automobile, comprenant un moteur d'entraînement réalisé sous forme de moteur à combustion interne et une boîte de vitesses automatique à plusieurs rapports, qui présente plusieurs engrenages planétaires disposés entre un arbre d'entrée et un arbre de sortie et accouplés les uns aux autres, qui contiennent à chaque fois en tant que composants de boîte de vitesses au moins une roue solaire à denture extérieure, un porte-satellites portant plusieurs pignons planétaires à denture extérieure et une couronne à denture intérieure, et qui peuvent être commutés pour l'ajustement de différents rapports de vitesse au moins en partie par le biais de plusieurs éléments de commutation en liaison à chaque fois avec l'un des composants de la boîte de vitesses, la boîte de vitesses automatique (1') étant formée par une boîte de vitesses partielle (2) du côté de l'entrée et par une boîte de vitesses partielle (3) du côté de la sortie et accouplée à celle-ci,
- la boîte de vitesses partielle (2) du côté de l'entrée étant réalisée sous forme de train planétaire simple (6) avec une roue solaire (S1), qui est fixée de manière permanente par rapport au boîtier de la boîte de vitesses (8), avec un groupe de pignons planétaires (P1) qui sont en engagement denté avec la roue solaire (S1) et qui sont montés à rotation sur un porte-satellites commun (CR1), et avec une couronne (R1), qui s'engrène avec les pignons planétaires (P1) et qui est connectée de manière permanente solidaire en rotation avec l'arbre d'entrée (4),
- la boîte de vitesses partielle (3) du côté de la sortie étant réalisée sous forme d'un train de Ravigneaux (7) avec une première roue solaire (S2) radialement plus petite, qui s'engrène avec un premier groupe de pignons planétaires (P2) axialement courts, avec une deuxième roue solaire (S3) radialement plus grande, qui s'engrène avec un deuxième groupe de pignons planétaires (P3) axialement longs, qui sont en engagement denté à chaque fois avec l'un des pignons planétaires (P2) axialement courts, avec un porte-satellites (CR2), sur lequel les pignons planétaires axialement courts (P2) et les pignons planétaires axialement longs (P3) sont montés à rotation, et avec une couronne (R2) qui s'engrène avec les pignons planétaires (P3) axialement longs et qui est connectée de manière permanente solidaire en rotation avec l'arbre de sortie (5),
et
- la roue solaire (S3) radialement plus grande de la boîte de vitesses partielle (3) du côté de la sortie pouvant être connectée au moyen d'un deuxième embrayage (C2) de manière sélective au porte-satellites (CR1) de la boîte de vitesses partielle (2) du côté de l'entrée,
- le porte-satellites (CR2) de la boîte de vitesses partielle (3) du côté de la sortie pouvant être connecté de manière sélective à l'arbre d'entrée (4) au moyen d'un troisième embrayage (C3),
- la roue solaire (S3) radialement plus grande de la boîte de vitesses partielle (3) du côté de la sortie pouvant être bloquée au moyen d'un premier frein de changement de vitesse (B1) de manière sélective par rapport au boîtier de la boîte de vitesses (8),
- le porte-satellites (CR2) de la boîte de vitesses partielle (3) du côté de la sortie pouvant être bloqué au moyen d'un deuxième frein de changement de vitesse (B2) de manière sélective par rapport au boîtier de la boîte de vitesses (8), et
- la roue solaire (S2) radialement plus petite de la boîte de vitesses étant connectée de manière solidaire en rotation au rotor (10) d'une première machine électrique (EM1), dont le stator (1) est connecté de manière solidaire en rotation au boîtier de la boîte de vitesses.

3. Chaîne de transmission d'un véhicule automobile, comprenant un moteur d'entraînement réalisé sous forme de moteur à combustion interne et une boîte de vitesses automatique à plusieurs rapports, qui présente plusieurs engrenages planétaires disposés entre un arbre d'entrée et un arbre de sortie et accouplés les uns aux autres, qui contiennent à chaque fois en tant que composants de boîte de vitesses au moins une roue solaire à denture extérieure, un porte-satellites portant plusieurs pignons planétaires à denture extérieure et une couronne à denture intérieure, et qui peuvent être commutés pour l'ajustement de différents rapports de vitesse au moins en partie par le biais de plusieurs éléments de commutation en liaison à chaque fois avec l'un des composants de la boîte de vitesses, la boîte de vitesses automatique (1') étant formée par une boîte de vitesses partielle (2) du côté de l'entrée et par une boîte de vitesses partielle (3) du côté de la sortie et accouplée à celle-ci,
- la boîte de vitesses partielle (2) du côté de l'entrée étant réalisée sous forme de train planétaire simple (6) avec une roue solaire (S1), qui est fixée de manière permanente par rapport au boîtier de la boîte de vitesses (8), avec un groupe de pignons planétaires (P1), qui sont en engagement denté avec la roue solaire (S1) et qui sont montés à rotation sur un porte-satellites commun (CR1), et avec une couronne (R1), qui s'engrène avec les pignons planétaires (P1) et qui est connectée de manière permanente solidaire en rotation avec l'arbre d'entrée (4),
- la boîte de vitesses partielle (3) du côté de la sortie étant réalisée sous forme d'un train de Ravigneaux (7) avec une première roue solaire (S2) radialement plus petite, qui s'engrène avec un premier groupe de pignons planétaires (P2) axialement courts, avec une deuxième roue solaire (S3) radialement plus grande, qui s'engrène avec un deuxième groupe de pignons planétaires (P3) axialement longs, qui sont en engagement denté à chaque fois avec l'un des pignons planétaires (P2) axialement courts, avec un porte-satellites (CR2), sur lequel les pignons planétaires axialement courts (P2) et les pignons planétaires, axialement longs (P3) sont montés à rotation, et avec une couronne (R2) qui s'engrène avec les pignons planétaires (P3) axialement longs et qui est connectée de manière permanente solidaire en rotation avec l'arbre de sortie (5),
et
- la roue solaire (S2) radialement plus petite de la boîte de vitesses partielle (3) du côté de la sortie pouvant être connectée au moyen d'un premier embrayage (C1) de manière sélective au porte-satellites (CR1) de la boîte de vitesses partielle (2) du côté de l'entrée,
- la roue solaire (S3) radialement plus grande de la boîte de vitesses partielle (3) du côté de la sortie pouvant être connectée au moyen d'un deuxième embrayage (C2) de manière sélective au porte-satellites (CR1) de la boîte de vitesses partielle (2) du côté de l'entrée,
- la roue solaire (S3) radialement plus grande de la boîte de vitesses partielle (3) du côté de la sortie pouvant être bloquée au moyen d'un premier frein de changement de vitesse (B1) de manière sélective par rapport au boîtier (8) de la boîte de vitesses et
- le porte-satellites (CR2) de la boîte de vitesses partielle (3) du côté de la sortie étant connecté de manière solidaire en rotation au rotor (10) d'une première machine électrique (EM1), dont le stator (11) est connecté de manière solidaire en rotation au boîtier de la boîte de vitesses.

4. Chaîne de transmission selon l'une quelconque des revendications précédentes,
**caractérisée en ce**
**qu'**une autre machine électrique (EM2) est disposée sur l'arbre d'entrée (4) de la boîte de vitesses automatique (1'), dont le rotor (10) est connecté de manière solidaire en rotation à l'arbre d'entrée (4) et dont le stator (11) est connecté de manière solidaire en rotation au boîtier de la boîte de vitesses (8).

5. Chaîne de transmission selon l'une quelconque des revendications 1 à 3,
**caractérisée en ce**
**qu'**une autre machine électrique (EM2) est disposée sur l'arbre de sortie (5) de la boîte de vitesses automatique (1'), dont le rotor (10) est connecté de manière solidaire en rotation à l'arbre de sortie (5) et dont le stator (11) est connecté de manière solidaire en rotation au boîtier de la boîte de vitesses (8).

6. Chaîne de transmission d'un véhicule automobile, comprenant un moteur d'entraînement réalisé sous forme de moteur à combustion interne et une boîte de vitesses automatique à plusieurs rapports, qui présente plusieurs engrenages planétaires disposés entre un arbre d'entrée et un arbre de sortie et accouplés les uns aux autres, qui contiennent à chaque fois en tant que composants de boîte de vitesses au moins une roue solaire à denture extérieure, un porte-satellites portant plusieurs pignons planétaires à denture extérieure et une couronne à denture intérieure, et qui peuvent être commutés pour l'ajustement de différents rapports de vitesse au moins en partie par le biais de plusieurs éléments de commutation en liaison à chaque fois avec l'un des composants de la boîte de vitesses, la boîte de vitesses automatique (1") étant réalisée sous forme d'un train de Ravigneaux (7),
- avec une première roue solaire (S2) radialement plus petite, qui s'engrène avec un premier groupe de pignons planétaires (P2) axialement courts,
- avec une deuxième roue solaire (S3) radialement plus grande, qui s'engrène avec un deuxième groupe de pignons planétaires (P3) axialement longs, qui sont en engagement denté à chaque fois avec l'un des pignons planétaires axialement courts (P2),
- avec un porte-satellites (CR2), sur lequel sont montés à rotation les pignons planétaires (P2) axialement courts et les pignons planétaires (P3) axialement longs, et
- avec une couronne (R2), qui s'engrène avec des pignons planétaires (P3) axialement longs et qui est connectée de manière permanente solidaire en rotation avec l'arbre de sortie (5),
et
- le porte-satellites (CR2) pouvant être connecté au moyen d'un troisième embrayage (C3) de manière sélective à l'arbre d'entrée (4),
- le porte-satellites (CR2) pouvant être bloqué au moyen d'un deuxième frein de changement de vitesse (B2) de manière sélective par rapport au boîtier de la boîte de vitesses (8) et
- la roue solaire (S2) radialement plus petite étant connectée de manière solidaire en rotation au rotor (10) d'une première machine électrique (EM1), dont le stator (11) est connecté de manière solidaire en rotation au boîtier de la boîte de vitesses et
- la roue solaire (S3) radialement plus grande étant connectée de manière solidaire en rotation au rotor (10) d'une deuxième machine électrique (EM2) dont le stator (11) est connecté de manière solidaire en rotation au boîtier de la boîte de vitesses.

7. Chaîne de transmission selon l'une quelconque des revendications précédentes,
**caractérisée en ce**
**qu'**au moins une machine électrique (EM1, EM2) peut fonctionner à la fois comme moteur et comme générateur.
